(19) Europäisches Patentamt
European Patent Office
Office européen des brevets

(11) **EP 2 469 952 A2**

## (12) EUROPEAN PATENT APPLICATION
published in accordance with Art. 153(4) EPC

(43) Date of publication:
**27.06.2012 Bulletin 2012/26**

(21) Application number: **10810157.7**

(22) Date of filing: **18.08.2010**

(51) Int Cl.:
**H04W 72/10** *(2009.01)*    **H04W 72/08** *(2009.01)*
**H04W 74/08** *(2009.01)*    **H04W 16/00** *(2009.01)*

(86) International application number:
**PCT/KR2010/005458**

(87) International publication number:
**WO 2011/021849 (24.02.2011 Gazette 2011/08)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **20.08.2009 KR 20090077338**

(71) Applicant: **Pantech Co., Ltd.**
**Seoul 121-270 (KR)**

(72) Inventors:
• **KIM, Kitae**
**Mapo-gu,**
**Seoul, 121-270 (KR)**

• **KWON, Kibum**
**Mapo-gu,**
**Seoul, 121-270 (KR)**
• **JUNG, Myungcheul**
**Mapo-gu,**
**Seoul, 121-270 (KR)**

(74) Representative: **Jordan, Volker Otto Wilhelm et al**
**Weickmann & Weickmann**
**Patentanwälte**
**Postfach 860 820**
**81635 München (DE)**

(54) **METHOD AND SYSTEM FOR ALLOCATING RESOURCES FOR COMPONENT CARRIERS IN A WIRELESS COMMUNICATION SYSTEM**

(57) The present disclosure relates to a wireless communication system which has a plurality of component carriers and a method and system for allocating resources for each component carrier. The present disclosure relates to a scheme in which cell coverage is set for each component carrier in consideration of the wireless environment of the component carriers, and a scheme in which a random access process of a user equipment is controlled in accordance with said set cell coverage and resources are allocated in accordance with a priority configuration.

FIG.4

**Description**

Technical Field

The present invention relates to a system and a method for allocating resources for multiple component carriers in a wireless communication system.

Background Art

With the development of a communication system, consumers such as enterprises and individuals have used highly various wireless terminals.

Accordingly, communication service providers continuously attempt to create a new communication service market for the wireless terminals and provide a service having a low price but reliability to expand a conventional communication service market.

Disclosure

Technical Problem

The present invention provides a method and a system, which can efficiently use one or more component carriers in a wireless communication system.

Further, the present invention provides a method and a system for allocating radio resources in consideration of a cell-coverage of a component carrier in a wireless communication system.

Moreover, the present invention provides a method and a system for allocating radio resources in consideration of a cell-coverage of a component carrier set according to a wireless environment of a UE in a wireless communication system.

Furthermore, the present invention provides a method and a system for allocating radio resources for component carriers by using position information on a UE in a wireless communication system.

In addition, the present invention provides a method and a system for allocating radio resources of a UE in consideration of the number of component carriers in a wireless communication system.

Further, the present invention provides a method and a system for sharing resources of one or more component carriers and allocating radio resources in a wireless communication system.

Further, the present invention provides a method and a system for efficiently performing a random access procedure for one or more component carriers in a wireless communication system.

Technical solution

In order to accomplish the above-mentioned objects, in accordance with an aspect of the present invention, there is provided a method of allocating resources for each component carrier in a wireless communication system, the method including setting a cell-coverage for each component carrier in consideration of a radio environment for each component carrier in an environment where one or more component carriers exist; controlling a random access procedure of a UE (User Equipment) according to the set cell-coverage and determining a component carrier which can be allocated resource with priority; and allocating resources to the UE through the component carrier which is allocated with priority.

In accordance with another aspect of the present invention, there is provided a method of allocating resources for each component carrier of a UE by a BS (Base Station) in a wireless communication system, the method including setting a cell-coverage for each component carrier in consideration of a radio environment for each component carrier in an environment where one or more component carriers exist; arranging a combination of random access regions in a band which can be used for each service region in consideration of a number of component carriers entering within the cell-coverage; setting an allocation priority of the random access regions arranged to correspond to each service region; randomly selecting one configuration index from a random access region having a priority during a camp-on process and transmitting a corresponding RACH parameter to the UE; and allocating resources to the UE through a component carrier which is allocated with priority.

In accordance with another aspect of the present invention, there is provided a method of communication by a UE in a wireless communication system, the method including receiving an RACH parameter from a BS in a camp-on process; and performing communication with the BS through a component carrier allocated according to the received RACH parameter; wherein performing of the communication with the BS includes identifying an arrangement of a combination of random access regions in a band which can be used for each component carrier region by the UE and the combination of the random access regions is set considering at least one of an RACH frequency-time and an RACH preamble set.

In accordance with another aspect of the present invention, there is provided a method of allocating resources for each component carrier by a UE, the method including sharing information on a preamble set including one or more preamble regions with a BS; selecting a preamble from preamble regions included in the preamble set; and transmitting the selected preamble to the BS.

In accordance with another aspect of the present invention, there is provided a method of allocating resource for each component carrier by a BS, the method including sharing information on a preamble set including one or more preamble regions with a UE; receiving a preamble from the UE; and transmitting a random access response by using the received preamble.

Brief Description of the Drawings

The foregoing and other objects, features and advantages of the present invention will become more apparent from the following detailed description when taken in conjunction with the accompanying drawings in which:

FIG. 1 is a block diagram of a wireless communication system to which embodiments of the present invention are applied;
FIG. 2 is an enlarged diagram of a frequency in a carrier aggregation environment;
FIG. 3 is a diagram of an anchor carrier;
FIG. 4 is a diagram of a cell-coverage for each CC having a different propagation characteristic (Spilt Field-type);
FIG. 5 is a diagram of a cell-coverage for each CC having a different propagation characteristic (Unified Field-type);
FIG. 6 illustrates an example where only a CC having an excellent propagation characteristic allocates resources to a UE in a CA environment;
FIG. 7 is a diagram of an increase in inter-cell interference generated when UEs use only a particular CC;
FIG. 8 is a diagram of a resource allocation caused due to a decrease in an SINR of a UE;
FIG. 9 illustrates an RACH ambiguity problem in an asymmetric CA;
FIG. 10 illustrates an example of setting a random access region through a time-frequency division in a CA environment where two CCs exist;
FIG. 11 illustrates an example of setting a random access region through a preamble-set division in a CA environment where two CCs exist;
FIG. 12 illustrates an example of setting a random access region through a time-frequency division and a preamble-set division at the same time in a CA environment where two CCs exist;
FIG. 13 is a flowchart of a resource allocating method for each CC in a wireless communication system according to an embodiment of the present invention;
FIG. 14 is a diagram of a cell-coverage calculating method according to a component considered in the same CC;
FIG. 15 is a diagram illustrating a derived cell-coverage different according to CCs in a CA environment;
FIG. 16 illustrates a random access region arranging method in consideration of a cell-coverage for each CC through a time-frequency sharing and a preamble-set division of a downlink CC;
FIG. 17 illustrates a random access region arranging method in consideration of a cell-coverage for each CC through a time-frequency sharing and a preamble-set division of an uplink CC;
FIG. 18 illustrates an example of allocating a priority of random access regions in a CA environment where two CCs exists in a cell-coverage;
FIG. 19 is a diagram illustrating a transmission of an RACH parameter in a CA environment where two CCs exist;
FIG. 20 illustrates an example of actually allocating resources to a UE in a CA environment where two CCs exist;
FIG. 21 illustrates an example of arranging a preamble-set region in each eNB when there are two preamble sets in a CA environment where two CCs exist;
FIG. 22 illustrates an example of arranging a preamble-set region in each eNB when there are three preamble sets in a CA environment where two CCs exist;
FIG. 23 illustrates an example of arranging a preamble-set region in each eNB when there are four preamble sets in a CA environment where two CCs exist;
FIG. 24 is a diagram illustrating a basic operation procedure of an RAP (Random Access Procedure) according to an embodiment of the present invention;
FIG. 25 is a flowchart of a resource allocating process according to an embodiment of the present invention;
FIG. 26 is a flowchart in which an eNB analyzes a preamble transmitted from a UE according to an embodiment of the present invention; and
FIG. 27 is a diagram illustrating allocations of a primary cell and a secondary cell according to an embodiment of the present invention.

Best Mode

Mode for Invention

Hereinafter, exemplary embodiments of the present invention will be described in detail with reference to the accompanying drawings. It should be noted that in assigning reference numerals to elements in the drawings, the same elements will be designated by the same reference numerals although they are shown in different drawings. Further, in the following description of the present invention, a detailed description of known functions and configurations incorporated herein will be omitted when it may make the subject matter of the present invention rather unclear.

In addition, terms, such as first, second, A, B, (a), (b) or the like may be used herein when describing components of the present invention. Each of these terminologies is not used to define an essence, order or sequence of a corresponding component but used merely to distinguish the corresponding component from other component(s). It should be understood that if it is described in the specification that one component is "connected," "coupled" or "joined" to another component, a third component may be "connected," "coupled," and "joined" between the first and second components, although the first component may be directly connected, coupled or joined to the second component.

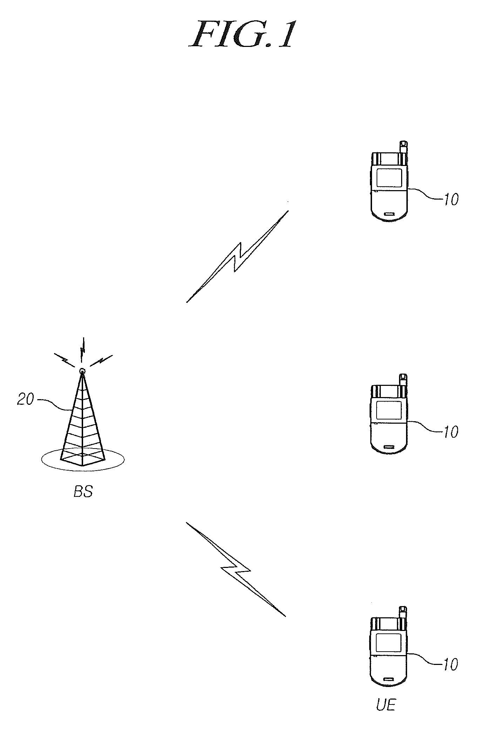

FIG. 1 is a block diagram of a wireless communication system to which embodiments of the present invention are applied. A wireless communication system is widely arranged in order to provide various communication systems such as voice and packet data.

Referring to FIG. 1, the wireless communication system includes a User Equipment (UE) 10 and a Base Station (BS) 20. The UE 10 and the BS 20 use various power allocating methods which will be discussed in the following description.

The UE 10 in this disclosure is a generic concept indicating a user terminal in wireless communication, and should be interpreted as a concept including all of a MS (Mobile Station), a UT (User Terminal), a SS (Subscriber Station), and a wireless device in a GSM as well as a UE (User Equipment) in a WCDMA, a LTE, and an HSPA.

The BS 20 or a cell in the present disclosure refers to a fixed station communicating with the UE 10, and may be referred to as other terms such as a Node-B, an eNB (evolved Node-B), a BTS (Base Transceiver System), and an access point.

That is, the BS 20 or a cell should be interpreted as a generic concept indicating some areas covered by a BSC (Base Station Controller) in a CDMA and a Node-B in a WCDMA, and is a concept including various coverage areas such as a mega cell, a macro cell, a micro cell, a pico cell, and a femto cell.

The UE 10 and the BS 20 in the present disclosure are used as a generic meaning, which are transmitting/receiving subjects used to implement a technology or a technological idea described in the present disclosure, and they are not limited by a specifically designated term or word.

A multiple access scheme applied to a wireless communication system has no limitation, and the wireless communication system can use various multiple access schemes such as a CDMA (Code Division Multiple Access), a TDMA (Time Division Multiple Access), an FDMA (Frequency Division Multiple Access), an OFDMA (Orthogonal Frequency Division Multiple Access), an OFDM-FDMA, an OFDM-TDMA, and an OFDM-CDMA.

A TDD (Time Division Duplex) scheme corresponding to a transmission using different times may be used for an uplink transmission and a downlink transmission, or an FDD (Frequency Division Duplex) scheme corresponding to a transmission using different frequencies may be used for an uplink transmission and a downlink transmission.

The power allocation technology according to an embodiment of the present invention may be applied to resource allocations of an asynchronous wireless communication field evolving into an LTE (Long Term Evolution) and an LTE-advanced via a GSM, a WCDMA, and an HSPA, and a synchronous wireless communication field evolving into a CDMA, a CDMA-2000, and a UMB. The present invention should not be interpreted as a limited and restricted concept to a specific wireless communication field, but should be interpreted as a concept including all technical fields, to which ideas of the present invention can be applied.

A carrier aggregation (hereinafter, referred to as a "CA") may be used in a wireless communication system to support a broader band.

The UE 10 or the BS or cell 20 can use multiple component carriers to expand a transmission/reception band more than before in an uplink and a downlink. At this time, all component carriers may be set in such a manner that only one band or one carrier is used or all of bands or carriers are compatible. One component carrier may mean one wireless communication band before the use of a carrier aggregation.

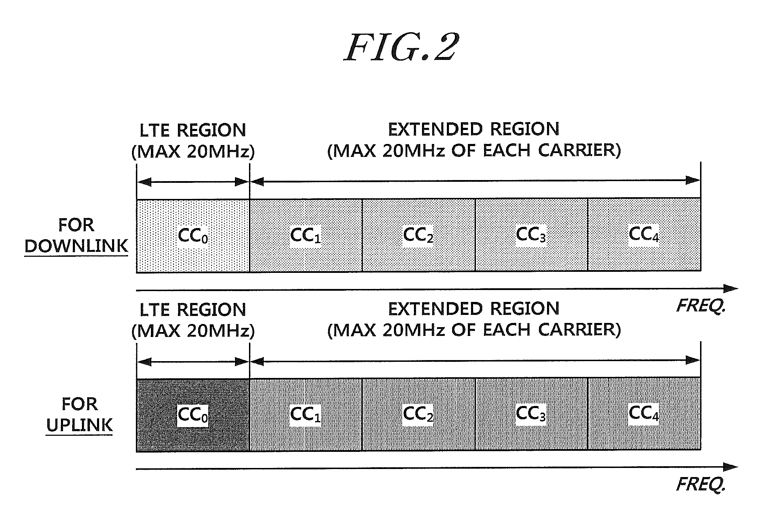

FIG. 2 is an enlarged diagram of a frequency in a carrier aggregation environment. FIG. 2 illustrates a case where 5 component carriers (hereinafter, referred to as a "CC") having a maximum of a 20 MHz band are used at the same time.

The UE can basically camp on through all CCs in a wireless communication environment. Here, the UE 10 camping on means that the UE is in a communicable state in a particular frequency band through a process in which the UE 10 synchronized with the BS 20 and the UE 10 receives basic control information for communication with the BS over an MIB (Master Information Block) such as a PBCH (Physical Broadcast Channel) and an SIB (System Information Block) such as a PDSCH (Physical Downlink Shared Channel).

Particularly, there are an uplink cell bandwidth, a random access parameter, and an uplink power control parameter in an SIB2.

Accordingly, when the UE 10 camps on an eNB, the UE 10 receives a parameter to use a Random Access Channel (hereinafter, referred to as an "RACH"). RACH parameters may include other parameters related to the RACH such as RACH scheduling information (time (subframe) and frequency (physical resource units)), RACH sequences, access class restrictions, persistence values, how often the RACH is retransmitted, and the allowed retransmission number of RACH, and RACH power control parameters.

Further, all UEs 10 can basically perform a random access to a CC. Currently, the most probable situation is that the UE 10 first performs a random access to a CC for an LTE more likely to be an anchor carrier in a CA environment. A reception of an SIB (System Information Block) from a PDSCH (Physical Downlink Shared Channel) means a reception of a PDSCH or a PDCCH, so that it is possible to determine each RACH parameter for each CC.

At this time, 0-3 bit carrier indicators may be used to distinguish respective CCs. The carrier indicator can consider generating and adding a new field within the PDCCH.

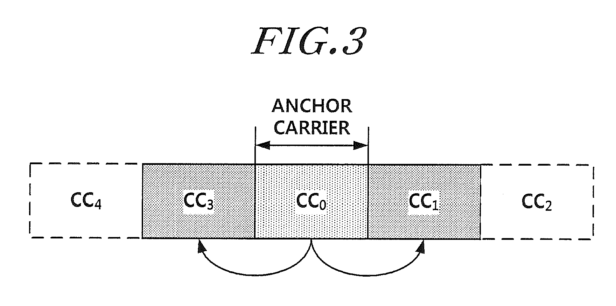

When there may be multiple CCs in a CA environment, a reference CC becomes the above mentioned anchor carrier (hereinafter, referred to as an "anchor CC"). That is, as shown in FIG. 3, the anchor CC is a reference informing a carrier operated in a CA mode based on the anchor CC.

FIG. 3 is a diagram of an anchor carrier.

Meanwhile, an LTE-A system can use extended multiple CCs. Further, the LTE-A system provides a backward compatibility with a conventional LTE system, so that the LTE-A system has at least one of CCs providing the compatibility with the conventional LTE system and takes over most system characteristics from the LTE system.

Further, propagation conditions for each CC may be greatly different from each other since frequency bands having various center frequencies may be used as CCs unlike the conventional frequency band extension. Particularly, the propagation conditions for each CC (for example, a path-loss characteristic) are likely to be highly different and accordingly a cell-coverage for each CC may also be different. At this time, a shadow and a power reduction depending on a distance may be reflected to the propagation condition (path-loss characteristic).

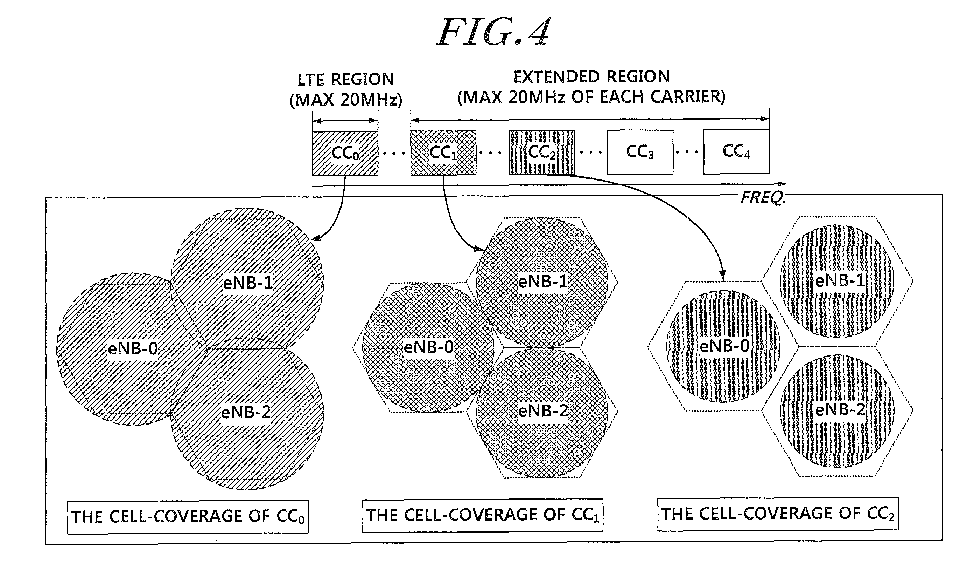

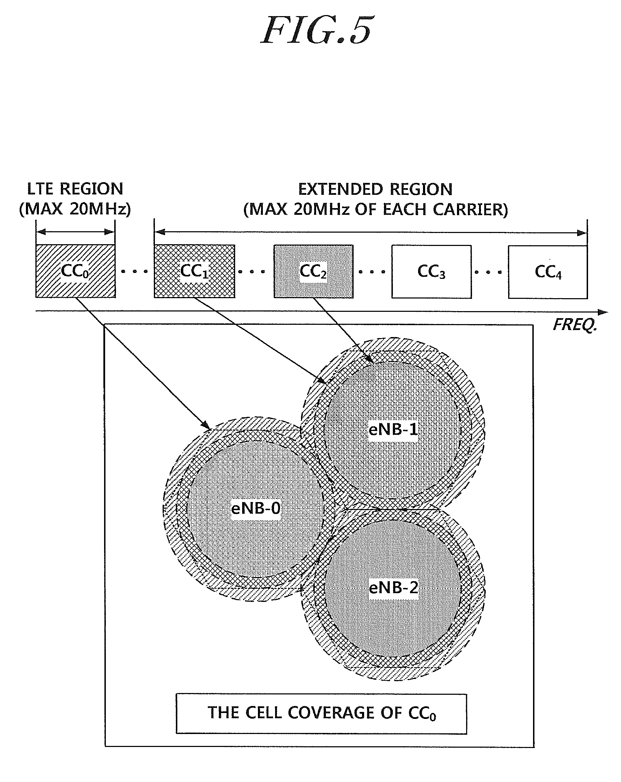

Accordingly, in general, the center frequency of the LTE system has a high probability of being a relatively low frequency and the center frequency has a high probability of being a high frequency in a case of an extended CC, so that the cell-coverage for each CC is also more likely to be different as shown in FIGs. 4 and 5. In general, the cell-coverage refers to a region satisfying a required SINR (Signal to Interference and Noise Ratio). When there is the UE 10 within a corresponding region, it is possible to perform a general call connection and a data transmission with the BS 20.

FIG. 4 is a diagram of a cell-coverage for each CC having a different propagation characteristic (Spilt Field-type) and FIG. 5 is a diagram of a cell-coverage for each CC having a different propagation characteristic (Unified Field-type).

The random access refers to an actual resource allocation for an actual data transmission. Accordingly, when the propagation conditions are different for each CC, a random access procedure may vary in a CA environment and an RACH may be transmitted with priority or randomly to a particular band (the particular band: anchor carrier, an LTE CC, etc.). A reception of a resource allocation by the actual UE 10 refers to a reception of an allocation of a PUSCH or a PDSCH which can transmit actual data.

When resources for transmitting the RACH are allocated only by considering a general propagation condition of the CC (path-loss characteristic), the UE 10 receiving an allocation of resources may be driven into a particular band. That is, a load-balance problem may occur. For example, the particular band may be an anchor carrier having a low center frequency or a conventional LTE CC because the above CCs have relatively excellent propagation conditions.

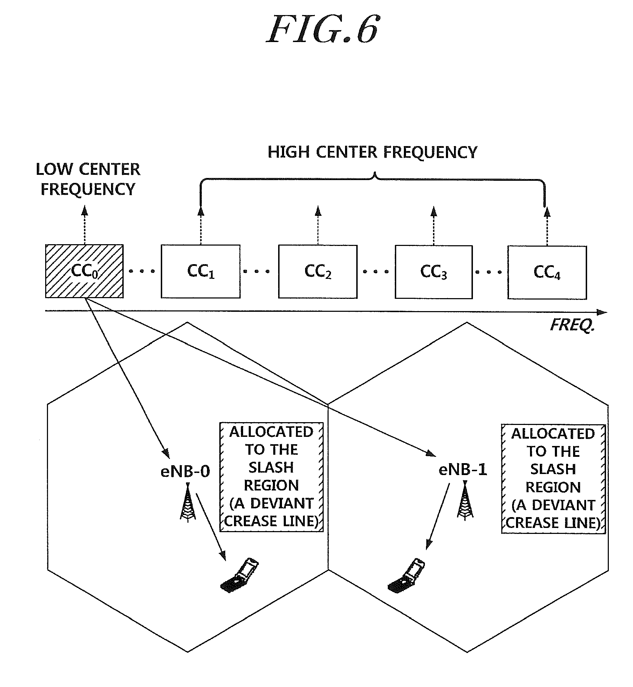

Meanwhile, when only the propagation condition of the CC is considered as shown in FIG. 6, the UE 10 can receive an allocation of resources only in a particular CC. Accordingly, there is a high probability of performing a handover or a resource reallocation to another CC later in consideration of an SINR of the UE 10.

FIG. 6 illustrates an example of allocating resources to the UE 10 through a CC having an excellent propagation condition in a CA environment. When the resources are allocated to only the UE 10 in the CC having an excellent propagation condition in a CA environment, other CCs may be wasted without being used.

However, a CC having a bad propagation condition can have a somewhat similar propagation condition or SINR characteristic to that of the CC for an LTE within a particular region. When the characteristics of the CC are not considered, the utilization of an extended CC may be highly decreased.

Further, the SINR of the UE 10 may be reduced due to an increase of inter-cell interference so that the efficiency of using resources may be somewhat decreased. Next, it may be required to reallocate resources to another CC (DCA) or a handover process may be required. That is, when resources are allocated to the UE 10 only considering the propagation condition of the CC, the UE 10 may be driven into the CC having a low center frequency.

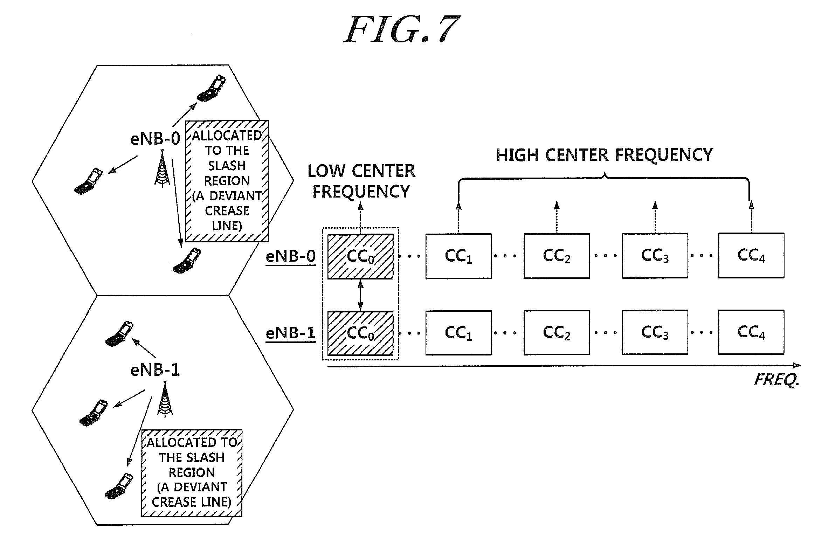

Accordingly, as shown in FIG. 7, the SINR performance of a corresponding CC is reduced, which decreases a total transmission rate.

FIG. 7 is a diagram of an increase in inter-cell interference generated when the UE is driven into a particular CC.

Accordingly, the UE 10 requires a handover or a resource reallocation process such as a DCA due to a decrease in the SINR. That is, although a propagation condition (path-loss characteristic) of a particular CC is excellent, the SINR of the UE 10 may be decreased due to an increase of inter-cell interference.

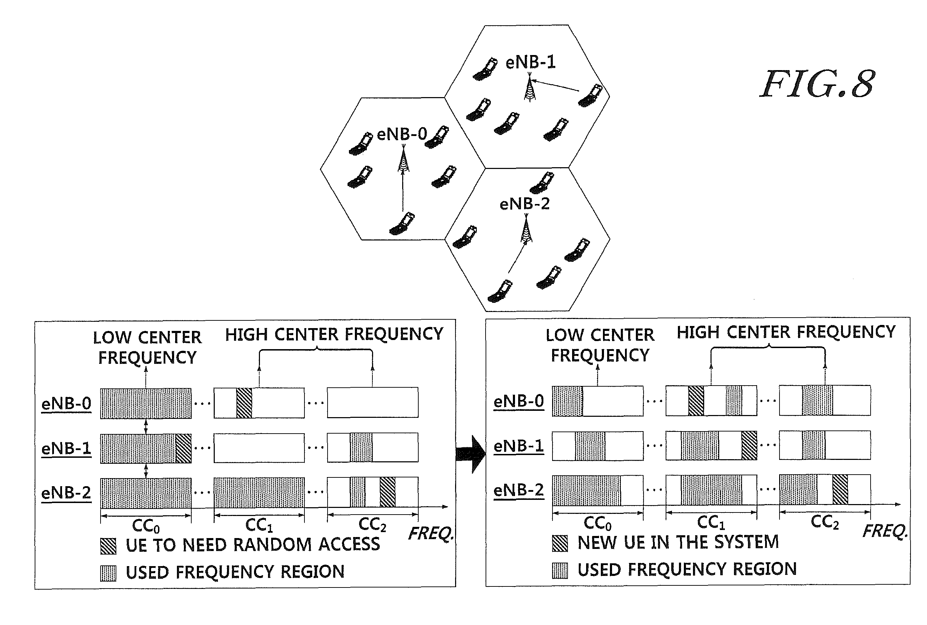

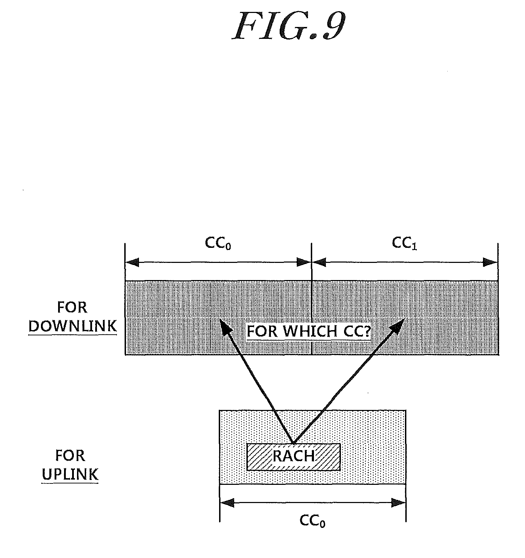

FIG. 8 is a diagram of a resource allocation caused by a decrease in an SINR of the UE 10. FIG. 9 illustrates an RACH ambiguity problem in an asymmetric CA.

As shown in FIG. 9, when there is an environment where UL/DL CCs are not the same and the environment corresponds to an asymmetric CA where a ratio of UL_CC:DL_CC is unequal, a subject for an RACH preamble reception is unclear. When there is an environment where general UL/DL CCs are not the same and a ratio of UL_CC:DL_CC is unequal, the ambiguity of the RACH is increased. Therefore, a single UL CC should support multiple DL CCs.

In order to solve the above mentioned problem, the following basic assumption can be made.

First, each BS 20 can know position information and information on quality of a signal such as SINR of the existing UE 10. That is, the UE 10 periodically reports its SINR to the BS 20. Further, the BS 20 as well as the UE 10 can know a position of each UE 10 through position related contents transmitted from the UE 10.

Further, the BS 20 can know a propagation condition (path-loss characteristic) of each CC. That is, propagation conditions of CCs may be different from each other and a propagation condition of a CC having a low center frequency is generally excellent.

Furthermore, a SINR distribution for each CC may be recognized by using received information of the existing UE 10. That is, in general, the SINR distribution has a close relation with a used frequency resource distribution of adjacent cells rather than an AWGN. In other words, as the adjacent cells use more frequency resources, an amount of interference generated in a center cell is increased and thus the SINR performance is generally deteriorated.

Moreover, an average SINR distribution according to a distance for each CC may be recognized. An approximate distribution may be recognized according to an SINR threshold required by a system, or an SINR threshold in accordance with a traffic type. As a frequency separation between center frequencies of CCs is large, the propagation condition for each CC and the SINR distribution may be different.

In another aspect, a method (a final eNB transmission method, a position tracking method based on an OTDOA of an LTE) of directly transmitting position information of the UE 10 and a method (a conventional WCDMA position tracking method and a position tracking scheme unlike the LTE) of indirectly obtaining UE position information through the BS 20 may be considered as a position information reporting method.

The method of directly transmitting position information of the UE 10 temporarily allocates a regular region of the PUSCH in the same cycle with that of the RACH and transmits the position information. For example, there is a pair of particular regions of the PUSCH corresponding to an RACH preamble index and the regions are temporarily generated and eliminated according to the RACH cycle.

In another example, a regular region of the PUCCH is temporarily allocated to the UE 10 in the same cycle as that of the RACH and the position information may be transmitted. That is, there is a pair of particular regions of the PDCCH corresponding to the RACH preamble index and the regions are temporarily generated and eliminated according to the RACH cycle.

In another example, the position information may be multiplexed on the RACH according to the transmission cycle.

The method of indirectly obtaining the UE position information through the BS 20 performs a power control by using a paging procedure when a low signal is detected by periodically tracking the UE 10 in a standby mode. Signal power of the UE is measured and an approximate position of the UE is tracked. That is, the BS 20 can already know information on position information for signal power of other BSs within a cell and the BS 20 can know information on how far the UE is located from the center of the BS based on the information,.

A subject of the RACH may be the BS 20 or the UE 10.

When the subject of the RACH is the BS 20, a preamble parameter is determined by the BS 20 in a conventional LTE and the determined preamble parameter is sent within an SIB (System Information Block). At this time, there should be a position information reporting of the UE 10. Further, the BS 20 sets a suitable RACH region with all information, and sets and transmits an RACH parameter of the SIB within the PDSCH.

Meanwhile, when the subject of the RACH is the UE 10 through a modification of a part of the RACH procedures, the BS 20 broadcasts a CC selection region according to a user's position and RACH parameters corresponding to the CC selection region through a PBCH or a PDSCH all the time. The UE 10 selects and performs an RACH preamble matched by using its position tracking information. In this case, since the BS should broadcast all information for a CC selection for a position, it is necessary to perform a modification within the PBCH and the PDSCH. However, the UE 10 does not have to report the measured position information so that it is not required to secure resources for transmitting the position information.

Hereinafter, based on the above mentioned basic assumption, a method is described in detail to increase the utilization of an extended CC in consideration of a propagation condition of each CC and the resource allocation to the UE is not limited to a CC having an excellent propagation condition in a CA environment.

That is, when the UE initially performs a random access, the UE can randomly access a particular CC in consideration that service areas for each CC may be different from each other, or can provide a uniform random accessibility of the UE by changing a subject to be randomly accessed according to circumstances, rather than setting only a determined CC as a subject to be randomly accessed.

More specifically, propagation conditions and SINR distributions may be different for each CC even in the same cell. In general, an SINR is decreased as a distance from the BS 20 is increased, but decrements may be different for each CC.

Accordingly, the cell-coverage for each cell is set considering such a condition. Next, a CC, which can be allocated resource with priority, is selected through controlling a random access process of the UE 10 according to the set cell-coverage.

Subsequently, a resource allocation according to a random access region allocated by the priority based on the cell-coverage is performed. At this time, the random access region includes a combination of two parameters of a frequency-time and a preamble-set.

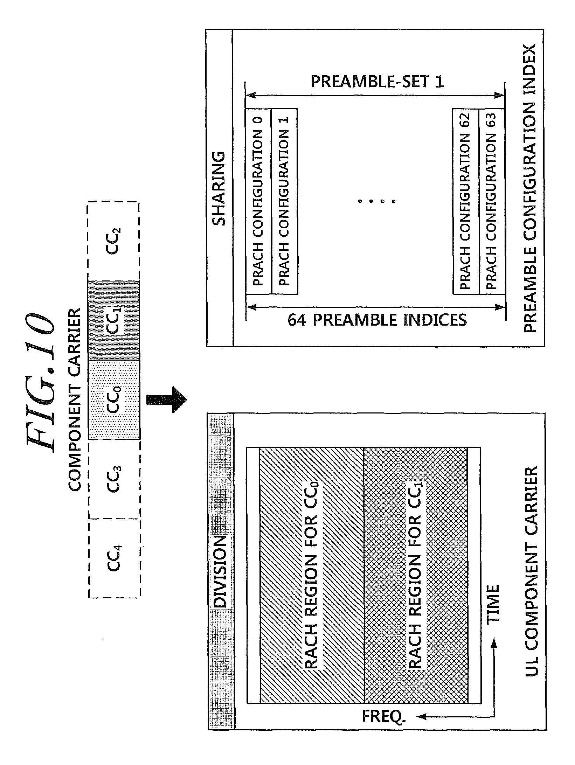

FIG. 10 illustrates an example of setting a random access region through a time-frequency division in a CA environment where two CCs exist.

Referring to FIG. 10, there is a method of setting a random access region using the same preamble set and considering a frequency-time division in the CA environment where two CCs exist as shown in an upper part of FIG. 10. In the method, 64 preamble sets of the RACH are used without any change as shown in a lower left part of FIG. 10 and a time-frequency region for transmitting a conventional RACH is divided for each CC as shown in a lower right part of FIG. 10.

The lower right part of FIG. 10 illustrates that the time-frequency region for transmitting the RACH is divided into two regions to be used, but the time-frequency region for transmitting the RACH may be divided according to the number of CCs which will be described later. That is, when the time-frequency region is divided for each CC, the time-frequency region may be divided to correspond to the number of CCs and may be divided into a maximum of 5 regions.

As shown in the lower right part of FIG. 10, a method of dividing the time-frequency region for transmitting the conventional RACH for each CC includes methods of dividing the time-frequency region according to the number of CCs, a particular number, a frequency reuse factor, etc.

The method of dividing the time-frequency region for transmitting the RACH for each CC according to the number of CCs is as illustrated in Table 1. That is, when the number of CCs is one, the time-frequency region is divided into one RACH region like the conventional method. When the number of CCs is 2 to 5, the time-frequency region is divided into 2 to 5 RACH regions to correspond to the number of CCs and then the divided RACH regions are used.

[Table 1]

| Total No. of CCs | Total No. of Time-Freq. Regions | Total No. of Preamble-sets | Total No. of RACH indices within each Preamble-set |
|---|---|---|---|
| 1 | 1 | 1 | 64 |
| 2 | 2 | 1 | 64 |
| 3 | 3 | 1 | 64 |
| 4 | 4 | 1 | 64 |
| 5 | 5 | 1 | 64 |

The method of dividing the RACH region according to the particular number is as illustrated in Table 2. At this time, the division of the RACH region by the particular number means that the time-frequency region may be divided into 3 regions when the number of CCs is the same as or larger than 3 (3, 4, and 5), and the time-frequency region may be divided into 4 regions when the number of CCs is the same as or larger than 4 in the same way.

[Table 2]

| Total No. of CCs | Total No. of Time-Freq. Regions | Total No. of Preamble-sets | Total No. of RACH indices within each Preamble-set |
|---|---|---|---|
| 1 | 1 | 1 | 64 |
| 2 | 2 | 1 | 64 |

(continued)

| Total No. of CCs | Total No. of Time-Freq. Regions | | | Total No. of Preamble-sets | Total No. of RACH indices within each Preamble-set |
|---|---|---|---|---|---|
| 3 | 3 | | | 1 | 64 |
| 4 | 3 | 4 | | 1 | 64 |
| 5 | 3 | 4 | 5 | 1 | 64 |

Further, the method of dividing the RACH region according to the number corresponding to the frequency reuse factor is as illustrated in Table 3.

[Table 3]

| Total No. of CCs | Total No. of Time-Freq. Regions | | Total No. of Preamble-sets | Total No. of RACH indices within each Preamble-set |
|---|---|---|---|---|
| 1 | 1 | | 1 | 64 |
| 2 | 2 | | 1 | 64 |
| 3 | 3 | | 1 | 64 |
| 4 | 3 | 4 | 1 | 64 |
| 5 | 3 | 4 | 1 | 64 |

At this time, the frequency reuse factor may be obtained based on equation (1) below.

$$K = i^2 + i \cdot j + j^2 \rightarrow 3, 4, 7, \cdots \qquad \ldots \ldots \ldots \ldots \ldots \ldots \ldots (1)]$$

In equation (1), K is a frequency reuse factor, i and j are shift parameters, and L is a parameter which is not used.

At this time, the frequency reuse factor is defined as follows. That is, available frequency reuse factors by equation (1) are 1, 3, 4, 7,..., so that the time-frequency region may be divided into regions corresponding to the frequency reuse factor 3 when the number of CCs is the same as or larger than 3, and the time-frequency region may be divided into regions corresponding to the frequency reuse factor 4 when the number of CCs is the same as or larger than 4. At this time, there is no frequency reuse factor corresponding to the number of frequency reuses, the time-frequency region is divided into the number of regions corresponding to the nearest frequency reuse factor.

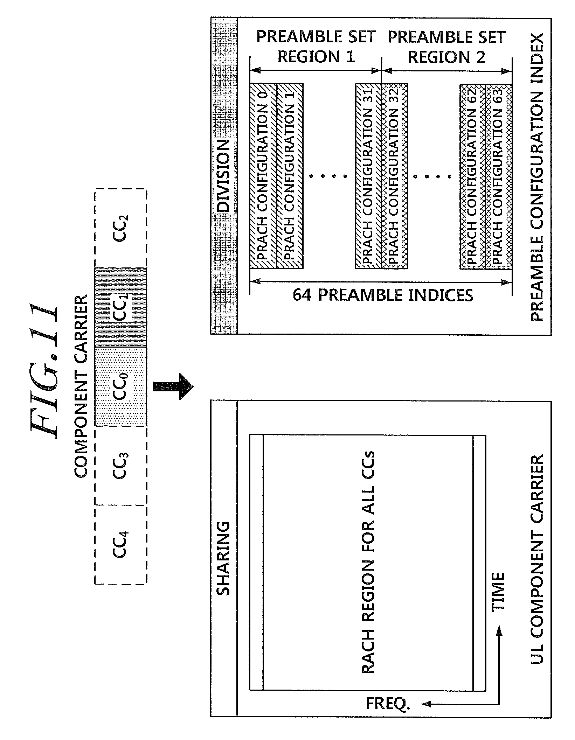

FIG. 11 illustrates an example of setting a random access region through a preamble-set division in a CA environment where two CCs exist.

Referring to FIG. 11, frequency-time resources for transmitting the conventional RACH are used without any change as shown in a lower right part of FIG. 11 and a preamble set is divided for each CC as shown in a lower left part of FIG. 11 in a CA environment where two CCs exist as shown in an upper part of FIG. 11.

The lower left part of FIG. 11 illustrates that a preamble set is divided into 2 sets according to 2 CCs and the divided preamble sets are used, but the preamble set may be divided according to the number of CCs and the divided preamble sets are used as discussed in the following description. That is, when the preamble set is divided, the preamble set is divided to correspond to the number of CCs and may be divided into a maximum of 5 sets.

As shown in the lower left part of FIG. 11, a method of dividing the preamble set for each CC includes methods of dividing the preamble set according to the number of CCs, a particular number, a frequency reuse factor, etc.

The method of dividing the preamble set for each CC according to the number of CCs is as illustrated in Table 4. That is, when the number of CCs is one, the preamble set is divided into one set. When the number of CCs is 2 to 5, the time-frequency region is divided into 2 to 5 sets to correspond to the number of CCs and then the divided sets are used.

[Table 4]

| Total No. of CCs | Total No. of Time-Freq. Regions | Total No. of Preamble-sets | Total No. of RACH indices within each Preamble-set |
|---|---|---|---|
| 1 | 1 | 1 | 64 |
| 2 | 1 | 2 | 32, 32 |
| 3 | 1 | 3 | 21, 21, 22 |
| 4 | 1 | 4 | 16, 16, 16, 16 |
| 5 | 1 | 5 | 13, 13, 13, 13, 12 |

The method of dividing the preamble set according to the particular number is as illustrated in Table 5.

[Table 5]

| Total No. of CCs | Total No. of Time-Freq. Regions | Total No. of Preamble-sets | | | Total No. of RACH indices within each Preamble-set | | |
|---|---|---|---|---|---|---|---|
| 1 | 1 | 1 | | | 64 | | |
| 2 | 1 | 2 | | | 32, 32 | | |
| 3 | 1 | 3 | | | 21, 21, 22 | | |
| 4 | 1 | 3 | 4 | | 21, 21, 22 | 16, 16, 16, 16 | |
| 5 | 1 | 3 | 4 | 5 | 21, 21, 22 | 16, 16, 16, 16 | 13, 13, 13, 13, 12 |

Further, the method of dividing the preamble set according to the number corresponding to the frequency reuse factor is as illustrated in Table 6.

At this time, the frequency reuse factor may be obtained based on equation (2) below.

[Table 6]

| Total No. of CCs | Total No. of Time-Freq. Regions | Total No. of Preamble-sets | | Total No. of RACH indices within one Preamble-set | |
|---|---|---|---|---|---|
| 1 | 1 | 1 | | 64 | |
| 2 | 1 | 2 | | 32.32 | |
| 3 | 1 | 3 | | 21,21,22 | |
| 4 | 1 | 3 | 4 | 21,21,22 | 16,16,16,16 |
| 5 | 1 | 3 | 4 | 21,21,22 | 16,16,16,16 |

$$K = i^2 + i \cdot j + j^2 \rightarrow 3,4,7,\cdots \quad \ldots\ldots\ldots\ldots\ldots \quad (2)$$

In equation (2), K is a frequency reuse factor, i and j are shift parameters, and L is a parameter which is not used. At this time, there is no frequency reuse factor corresponding to the number of frequency reuses, the preamble set is divided into the number of sets corresponding to the nearest frequency reuse factor.

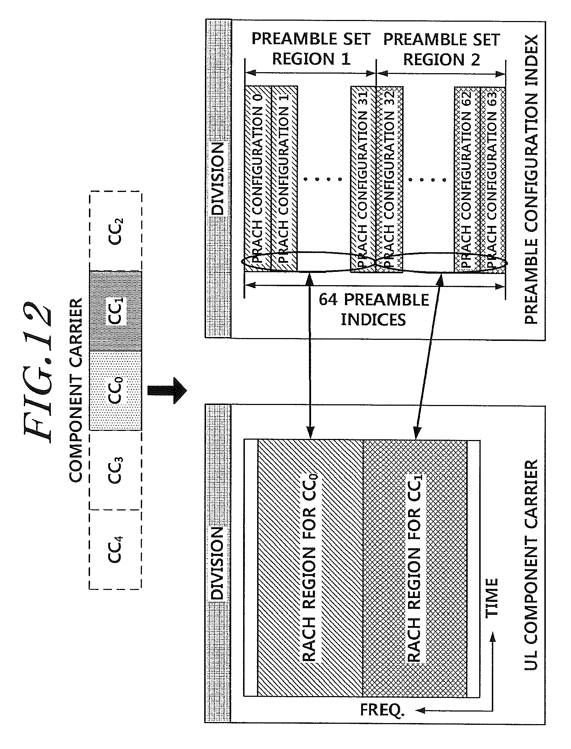

FIG. 12 illustrates an example of setting a random access region through a time-frequency division and a preamble-set division at the same time in a CA environment where two CCs exist.

Referring to FIG. 12, there is a method of simultaneously considering a time-frequency and a preamble set in the CA environment where two CCs exist as shown in an upper part of FIG. 12. In the method, a time-frequency region for transmitting the conventional RACH is divided for each CC as shown in a lower right part of FIG. 12 and 64 preamble sets of the RACH are divided to be used for each CC as shown in a lower left part of FIG. 12. At this time, the lower left and right parts illustrate that the time-frequency region for transmitting the RACH and the preamble set are divided into two regions and sets according to two CCs, respectively and they are used, but the time-frequency region for transmitting the RACH and the preamble set may be divided according to the number of CCs which will be described later. That is, when the time-frequency region and the preamble set are divided for each CC, the region and the set may be divided into the number of regions and sets corresponding to the number of CCs and may be divided into a maximum of 5 regions and sets, respectively.

The method of dividing the time-frequency region for transmitting the RACH and the preamble set for each CC includes methods of dividing the time-frequency region for transmitting the RACH and the preamble set according to the number of CCs, a particular number, a frequency reuse factor, etc.

The method of dividing the time-frequency region for transmitting the RACH and the preamble set for each CC according to the number of CCs is as illustrated in Table 7. That is, when the number of CCs is one, the time-frequency region for transmitting the RACH and the preamble set are divided into one region and one set as in the conventional art. When the number of CCs is 2 to 5, the time-frequency region and the preamble set are divided into 2 to 5 regions and sets to correspond to the number of CCs and then the divided regions and sets are used.

[Table 7]

| Total No. of CCs | Total No. of Time-Freq. Regions | Total No. of Preamble-sets | Total No. of RACH indices within each Preamble-set |
|---|---|---|---|
| 1 | 1 | 1 | 64 |
| 2 | 2 | 2 | 32, 32 |
| 3 | 3 | 3 | 21,21,22 |
| 4 | 4 | 4 | 16,16,16.16 |
| 5 | 5 | 5 | 13.13.13.13.12 |

The method of dividing the time-frequency region and the preamble set according to the particular number is as illustrated in Table 8.

[Table 8]

| Total No. of CCs | Total No. of Time-Freq. Regions | | | Total No. of Preamble-sets | | | Total No. of RACH indices within each Preamble-set | | |
|---|---|---|---|---|---|---|---|---|---|
| 1 | 1 | | | 1 | | | 64 | | |
| 2 | 2 | | | 2 | | | 32, 32 | | |
| 3 | 3 | | | 3 | | | 21, 21, 22 | | |
| 4 | 3 | 4 | | 3 | 4 | | 21, 21, 22 | 16, 16, 16, 16 | |
| 5 | 3 | 4 | 5 | 3 | 4 | 5 | 21, 21, 22 | 16, 16, 16, 16 | 13, 13, 13, 13, 12 |

Further, the method of dividing the time-frequency region and the preamble set according to the number corresponding to the frequency reuse factor is as illustrated in Table 9.

[Table 9]

| Total No. of CCs | Total No. of Time-Freq: Regions | Total No. of Preamble-sets | Total No. of RACH indices within one Preamble-set |
|---|---|---|---|
| 1 | 1 | 1 | 64 |
| 2 | 2 | 2 | 32,32 |

(continued)

| Total No. of CCs | Total No. of Time-Freq: Regions | | Total No. of Preamble-sets | | Total No. of RACH indices within one Preamble-set | |
|---|---|---|---|---|---|---|
| 3 | 3 | | 3 | | 21,21,22 | |
| 4 | 3 | 4 | 3 | 4 | 21,21,22 | 16,16,16,16 |
| 5 | 3 | 4 | 3 | 4 | 21,21,22 | 16,16,16,16 |

At this time, the frequency reuse factor may be obtained based on equation (3) below.

$$K = i^2 + i \cdot j + j^2 \rightarrow 3,4,7,\cdots \quad \dots\dots\dots\dots\dots \quad (3)$$

In equation (3), K is a frequency reuse factor, i and j are shift parameters, and L is a parameter which is not used. At this time, there is no frequency reuse factor corresponding to the number of frequency reuses, the time-frequency region and the preamble set are divided into the number of regions and sets corresponding to the nearest frequency reuse factor, respectively.

Hereinafter, a method of setting a cell service region in consideration of propagation conditions of component carriers changed according to their propagation conditions and allocating resources by controlling a random access procedure according to the set cell service region will be described in detail with reference to the drawings.

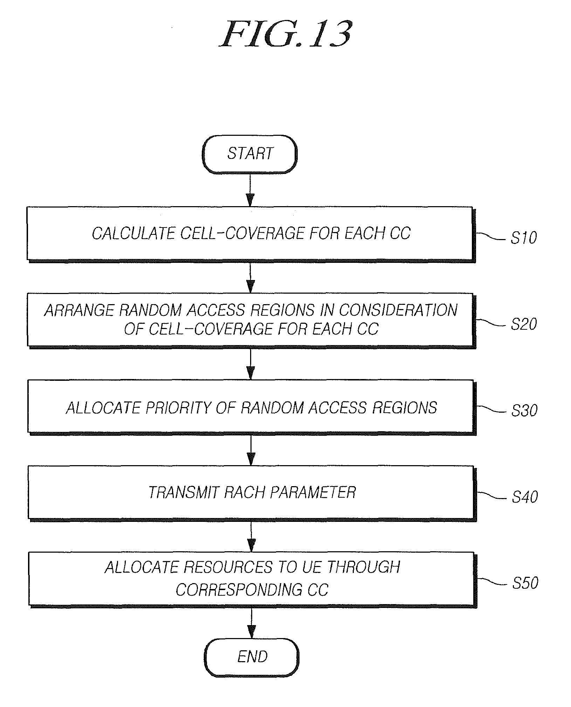

FIG. 13 is a flowchart of a resource allocating method for each CC in a wireless communication system according to an embodiment of the present invention.

Referring to FIG. 13, the resource allocating method for each CC in a wireless communication system according to an embodiment of the present invention includes calculating a cell-coverage for each CC in step S10, arranging random access regions in consideration of a cell-coverage for each CC in step S20, allocating a priority of random access regions in step S30, transmitting an RACH parameter in step S40, and allocating resources to a UE through a corresponding CC in step S50.

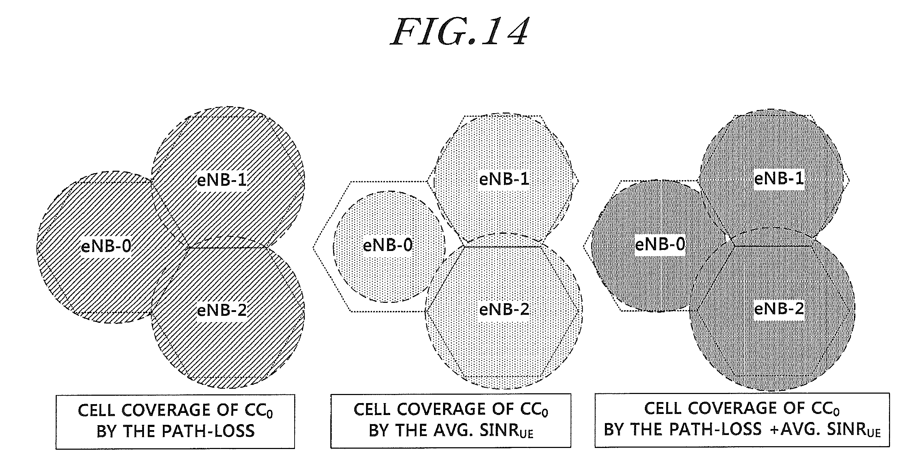

FIG. 14 is a diagram of a cell-coverage calculating method according to a component considered in the same CC.

Step S10 of calculating the cell-coverage for each CC corresponds to a step of calculating the cell-coverage for each CC by the BS 20. The cell-coverage calculating method for each CC includes a method considering only a propagation condition (path-loss) for each CC, a method considering only an SINR distribution for each CC (cell-coverage is calculated using position information and an SINR reported by the UE), and a method considering a combination of the propagation condition (path-loss) for each CC and the SINR distribution for each CC as sequentially shown in FIG. 14.

Next, the BS 20 combines cell-coverages for each CC. Accordingly, regions of CCs satisfying requirements for each CC are derived.

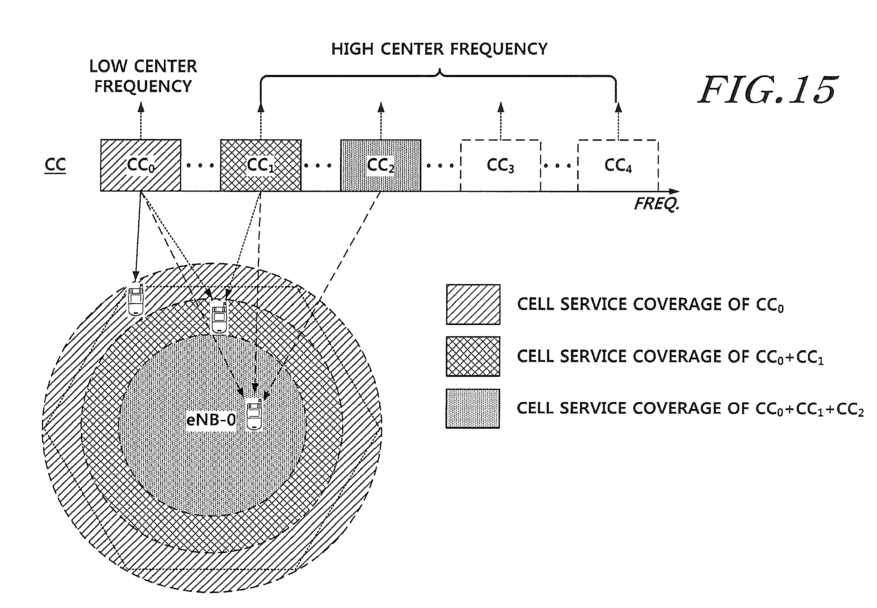

FIG. 15 is a diagram illustrating derived cell-coverage different according to CCs in a CA environment.

For example, as shown in FIG. 15, when regions of CCs satisfying the requirements for each CC are derived, a cell-coverage of a CC2 is most narrow, a cell-coverage of a CC1 is wider, and a cell-coverage of a CC0 is the widest based on the BS 20. The cell-coverage divided for each CC is a reference of selecting a random access region.

Referring to FIG. 13, step S20 of arranging the random access regions in consideration of the cell-coverage for each CC corresponds to a step of arranging a combination of random access regions in a band, which can be used for each region according to the number of CCs within the cell-coverage by the BS 20.

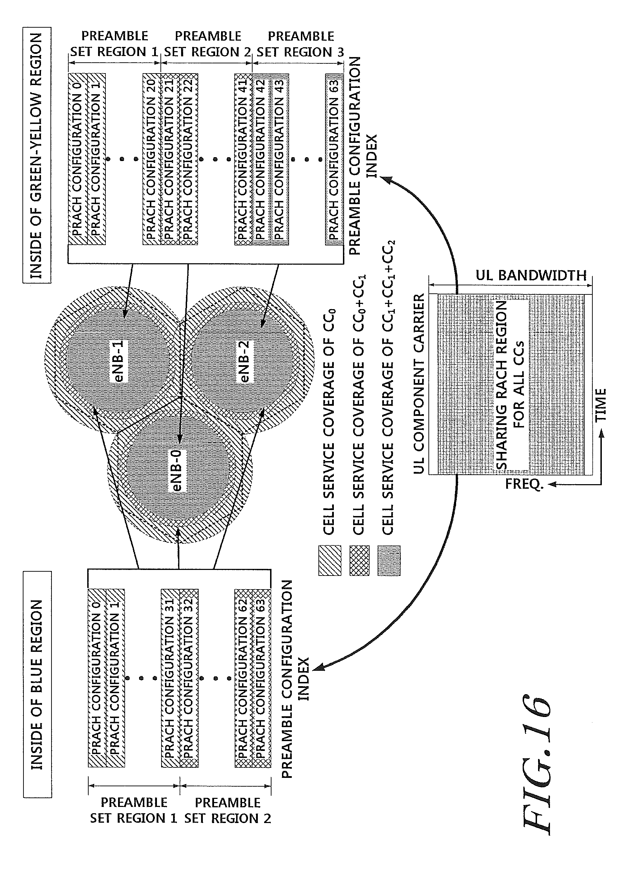

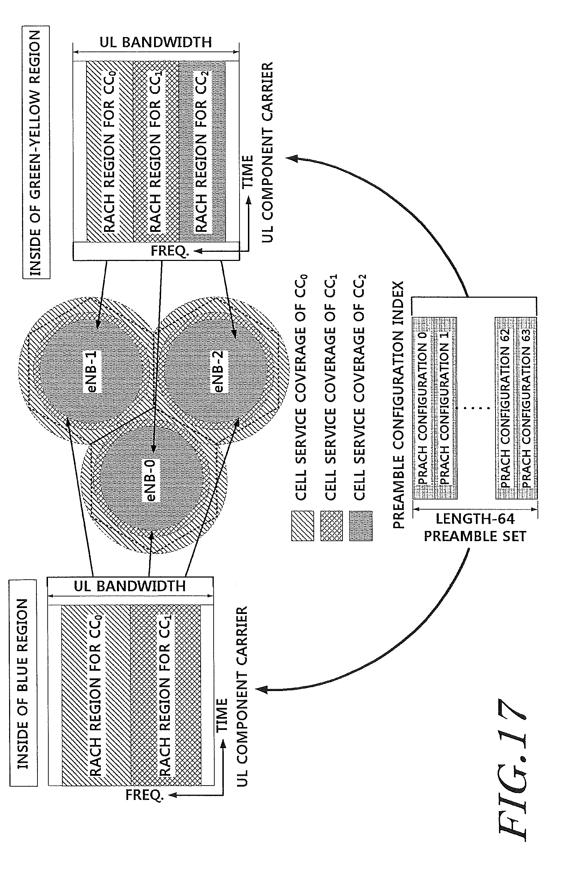

FIG. 16 illustrates a random access region arranging method in consideration of a cell-coverage for each CC through a time-frequency sharing and a preamble-set division of a downlink CC. Meanwhile, FIG. 17 illustrates a random access region arranging method in consideration of a cell-coverage for each CC through a time-frequency sharing and a preamble-set division of an uplink CC.

Referring to FIG. 13, step S30 of allocating the priority of random access regions corresponds to a step of setting an allocating priority of random access regions arranged in accordance with each service region.

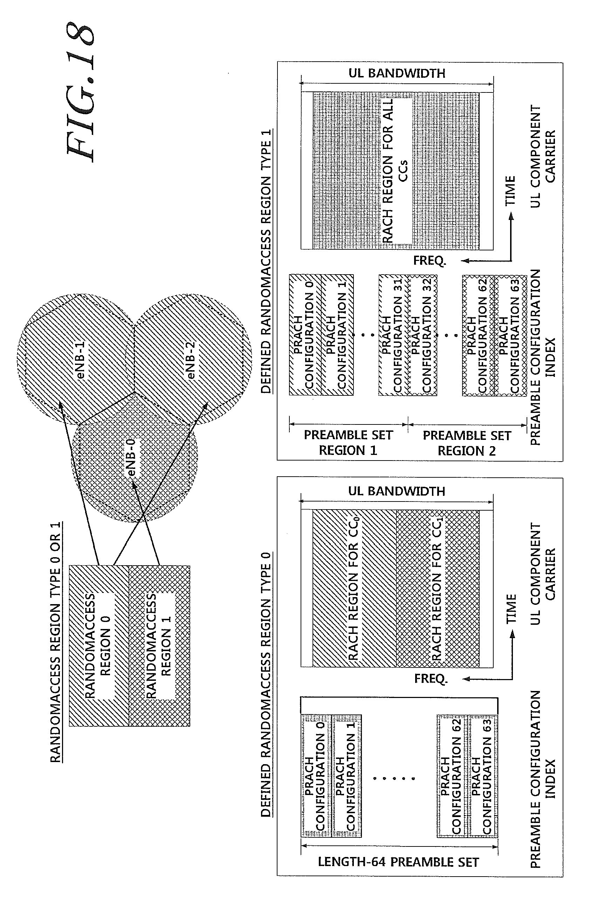

FIG. 18 illustrates an example of allocating a priority of random access regions in a CA environment where two CCs exists in a cell-coverage.

Referring to FIG. 18, in this step, an allocating order is set for each cell of the random access regions generated by the above mentioned method through the combination of the time-frequency region and the preamble set.

Referring back to FIG. 13, step S40 of transmitting the RACH parameter corresponds to a step in which the BS 20 randomly selects one configuration index (Time-Frequency Information, Preamble Index) in random access regions having a priority and transmits a corresponding parameter to the UE 10 through an SIB during a camp on process. At this time, the configuration indexes may include a total of 64 indexes.

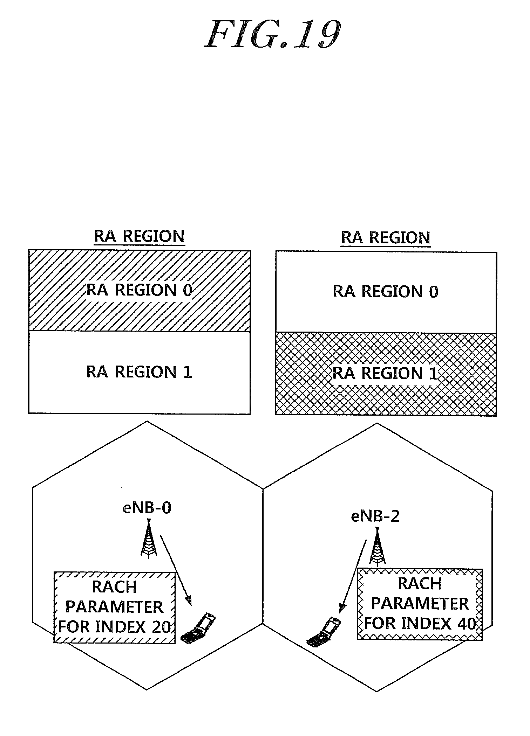

FIG. 19 is a diagram illustrating a transmission of an RACH parameter in a CA environment where two CCs exist.

Referring to FIG. 19, an eNB-0 transmits an RACH parameter for an index 20 to the UE by using an upper region (RA Region 0) of the RACH region in a CA environment where two CCs exist. Further, an eNB-2 transmits an RACH parameter for an index 40 to the UE by using a lower region (RA Region 1) of the RACH region.

Referring back to FIG. 13, step S50 of allocating resources to the UE through the corresponding CC corresponds to a step in which the BS 20 allocates resources to the UE through the corresponding CC. Step S50 may be equally applied to both UL/DL conditions.

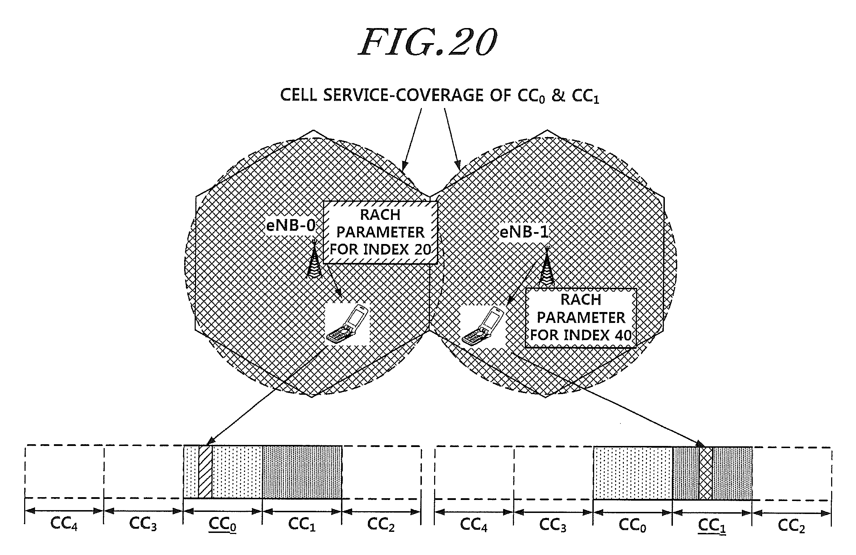

FIG. 20 illustrates an example of actually allocating resources to the UE 10 in a CA environment where two CCs exist.

Referring to FIG. 20, resources, for example, a PUSCH and a PDSCH are actually allocated to the UE 10 in a CA environment where two CCs exist.

That is, the UE having received an RACH parameter for an index 20 from an eNB-0 allocates the PUSCH or the PDSCH to a frequency resource (frequency band) corresponding to the index 20 of a CC0 by using the RACH parameter for the index 20 in the CA environment where two CCs exist.

Further, the UE having received an RACH parameter for an index 40 from an eNB-2 allocates the PUSCH or the PDSCH to a frequency resource (frequency band) corresponding to the index 40 of a CC1 by using the RACH parameter for the index 40. At this time, there is no resource to be allocated to the UE 10 in a corresponding CC and the PUSCH or the PDSCH is allocated to an empty band of another CC.

The resource allocating method for each CC does not change a conventional call connection process for the backward compatibility with the LTE.

Further, in the method of allocating random access regions by using position information of the UE 10, the RACH parameter of the UE 10 may be transmitted in a UE-specific manner. That is, an application environment of a corresponding random access region may be different according to the UE 10.

Accordingly, although different random access region methods are applied for each UE, the BS 20 can recognize the applied method.

The position information of the UE 10 may be periodically reported to the BS 20. At this time, all UEs 10 in a standby mode can periodically report corresponding information to some reserved resources of the PUSCH, but the present invention is not limited thereto. That is, the BS 20 can know positions of all users within a cell through periodically probing a particular section of the PUSCH.

Meanwhile, when the UE 10 moves, the BS 20 has difficulty in obtaining a preamble transmitted from the UE 10. Accordingly, in a selection of a random access region, the selection may be performed to correspond to a moving environment of the cell-coverage of the UE 10.

Meanwhile, when propagation conditions of all CCs are similar, a preamble set region may be allocated in a CA environment where the cell-coverage of all BSs 20 is overlapped.

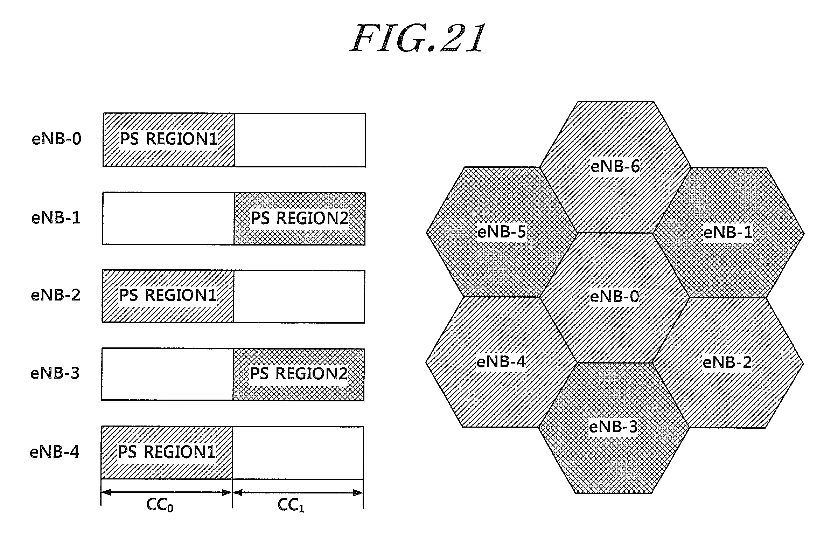

FIG. 21 illustrates an example of arranging a preamble-set region in each BS 20 when there are two preamble sets in a CA environment where two CCs exist.

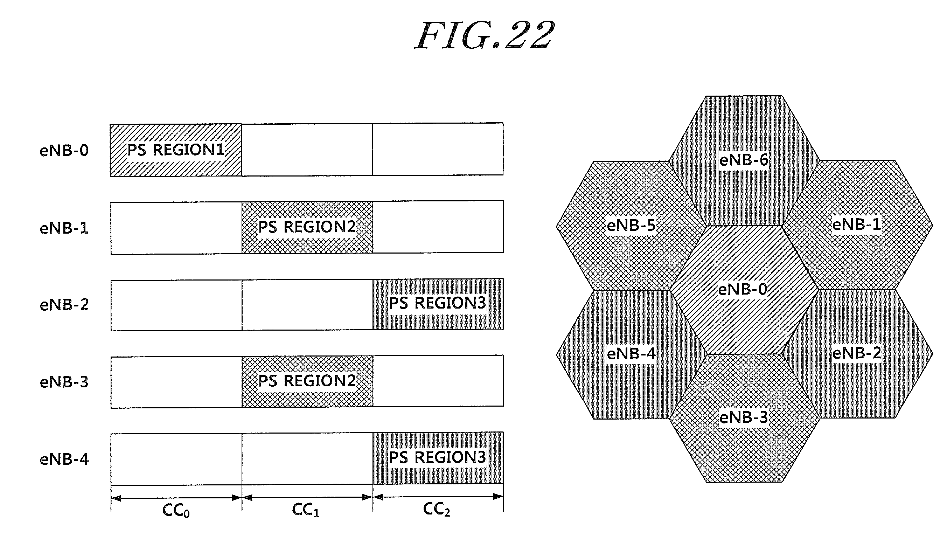

FIG. 22 illustrates an example of arranging a preamble-set region in each BS 20 when there are three preamble sets in a CA environment where two CCs exist.

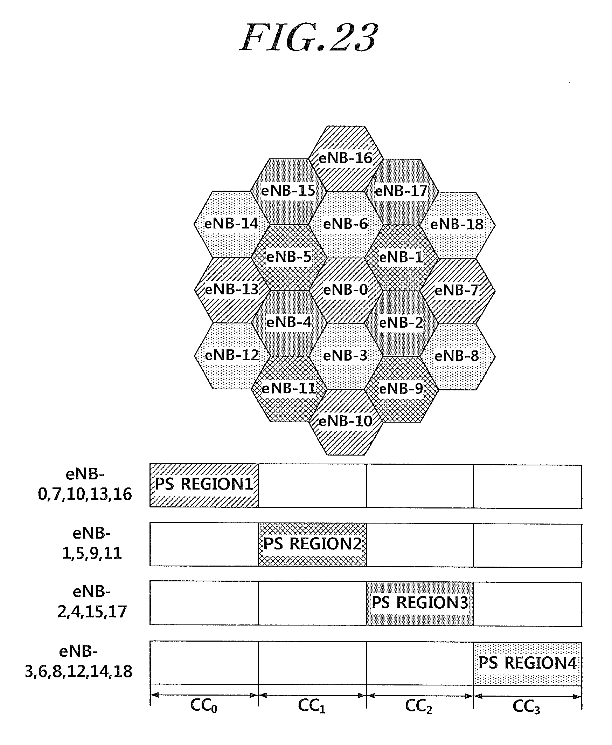

FIG. 23 illustrates an example of arranging a preamble-set region in each BS 20 when there are four preamble sets in a CA environment where two CCs exist.

That is, when there is one preamble set, the arrangement is the same as that of a conventional LTE. Meanwhile, when there are two preamble sets, the preamble sets may be alternately arranged as shown in FIG. 21.

Further, when there are three preamble sets, the preamble sets may be arranged based on the frequency reuse factor 3 as shown in FIG. 22.

Furthermore, when there are four preamble sets, the preamble sets may be arranged based on the frequency reuse factor 4 as shown in FIG. 23.

So far, the embodiments of the present invention have been described with reference to the drawings. The embodiments of the present invention have the following advantages but the present invention is not limited thereto.

First, it is possible to flexibly allocate resources in consideration of propagation conditions of CCs based on the distribution and the SINR of the UE. That is, the SINR performance of the UE is prevented from being suddenly deteriorated because users are concentrated in a particular CC. Further, when it is determined that the cell-coverage of CCs is similar, a resource allocating method considering inter-cell interference may be applied according to circumstances in a resource allocation. Particularly, when propagation conditions of all CCs are similar, it is possible to set a random access region in consideration of a general frequency reuse pattern.

Second, each eNB can divisibly allocate resources to an actual UE, so an initial allocation of resources is easy. General frequency utilizing methods (frequency reuse, interference control, etc.) may be applied when the difference between performances due to frequency characteristics of CCs is within a predetermined standard since propagation conditions of CCs satisfy necessary requirements.

Third, it is possible to solve a load-balance problem in which UEs are concentrated in a particular CC in all eNBs.

Fourth, it is possible to obtain an indirect effect of controlling inter-cell interference since the cell arranging method is employed through a designation of the preamble set region for each ell.

Finally, it is possible to extend a method of allocating the preamble set for each eNB to a method of setting a position of an anchor carrier.

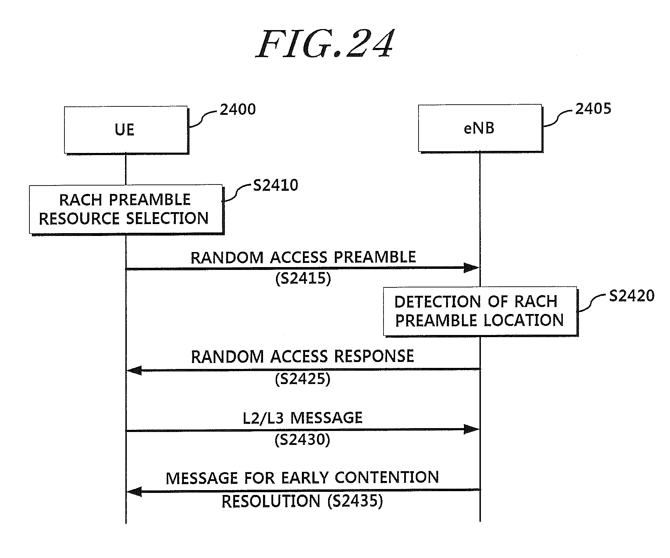

Meanwhile, as described above, a subject, which requires allocating resources, may be basically both an eNB and a UE in the present invention and a basic operation of an RAP (Random Access Procedure) is as illustrated in FIG. 24.

Here, step S2410 and step S2420 are added processes in the present invention, and the remaining steps S2415, S2525, S2430, and S2435 correspond to contention-based RAPs determined in a 3GPP LTE.

Step S2415 corresponds to a step in which the UE selects and transmits one preamble of 64 preambles. Step S2425 corresponds to a Random Access Response (RAR) transmitted by the eNB through a Physical Downlink Shared Channel (PDSCH). A Random Access Radio Network Temporary Identifier (RA-RNTI) is allocated to the RAR and a time-frequency slot in which the preamble transmitted from the UE is detected, may be identified through the RA-RNTI.

Further, the RAR message contains a temporary Cell-RNTI (C-RNTI) used in step 3 (S2430). Step S2430 corresponds to a step of transmitting a Layer2/Layer3 message. The transmission of the Layer2/Layer3 message refers to a scheduled initial uplink transmission through a Physical Uplink Shared Channel (PUSCH) and uses a Hybrid Automatic Repeat Request (HARQ).

The L2/L3 message basically transmits an actual RAP operation message such as an RRC connection request, a tracking area update, or a Scheduling Request (SR). Finally, step S2435 corresponds to a step of determining the C-RNTI or the temporary C-RNTI (UE-identity). In the contention-based RAP, the same UE-identity (or C-RNTI) is allocated to UEs, so that collisions may be generated.

Accordingly, a UE having an ACK in a contention resolution message terminates the RAP and a UE having collision related matters performs the RAP again.

In the RACH preamble resource selection (S2410), an operation subject is one of a UE 2400 and an eNB 2405. Accordingly, a subject of the operation of the RACH preamble resource selection is different. For example, when the UE selects one of preambles of a CC0 region and a CC1 region through its determination in a resource request for the CC0 and the CC1 after a preamble resource setting and an information exchange between the eNB and the UE are performed as shown in FIG. 10, a subject which requests the resource allocation is the UE (resource allocation request subject UE).

Meanwhile, when the eNB transmits in advance a selected region of the preamble through an RRC signaling and selects one preamble within a corresponding region, a subject, which requests a resource allocation, is the eNB (resource allocation request subject eNB).

Accordingly, the present invention has a structure, which follows the basic operation of the conventional RAP (Random Access procedure) and adds the process of setting and analyzing preamble resources transmitted between the UE and the eNB to the conventional RAP.

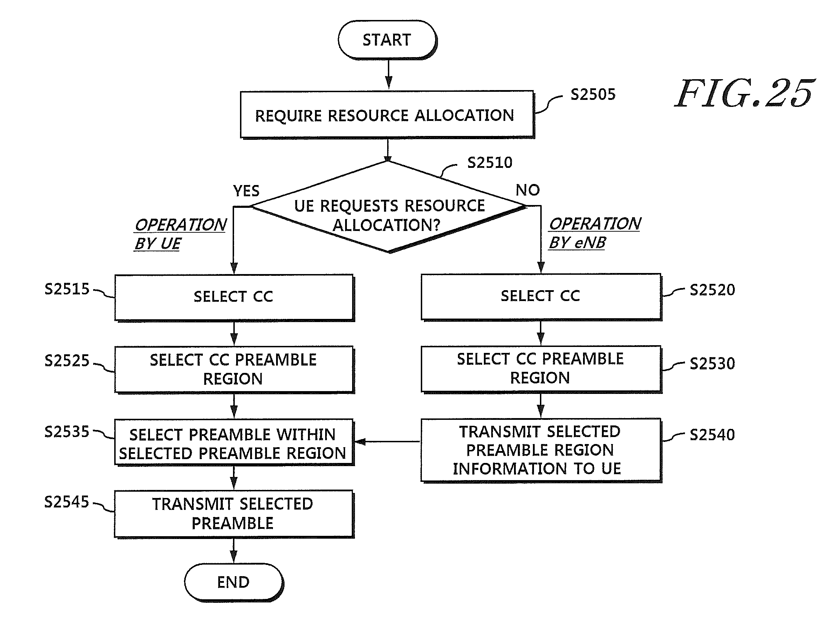

FIG. 25 illustrates a process of selecting a CC required according to a preamble resource allocation subject and a series of procedures of selecting a preamble region corresponding to the selection of the CC and resources within the region.

Referring to FIG. 25, the following processes may be performed in the UE or the eNB. It is identified that a resource allocation is required (for example, a new CC allocation) in step S2505. It is identified whether the resource allocation subject is the UE in step S2510.

Here, when the resource allocation subject is the UE, steps S2515 to S2545 are performed. That is, the UE selects a CC in step S2515 and selects a preamble region of the CC in step S2525. As described above, a set for a preamble region which can be allocated for each CC is shared between the UE and eNB in advance, so that the UE selects a preamble region which can be selected in a corresponding CC. Further, the UE selects a preamble within the corresponding preamble region in step S2535. A plurality of preambles may be included in the preamble region and the UE selects one preamble from the plurality of preambles. Further, the UE transmits the selected preamble to the eNB in step S2545.

Meanwhile, referring to a case where the eNB allocates resources in step S2510, the eNB also selects a CC in step S2520. The eNB selects a preamble region for the selected CC in step S2530. As described above, a set for a preamble region which can be allocated for each CC is shared between the UE and eNB in advance, so that the eNB selects a preamble region which can be selected in a corresponding CC. Further, the eNB transmits region information on the selected preamble to the UE in step S2540. Next, the UE selects a preamble within the corresponding region based on the region information on the preamble received from the eNB in step S2535. The eNB receives the preamble selected by the UE from the UE in step S2545. As a result, the eNB can allocate resources for a corresponding CC by using a corresponding preamble.

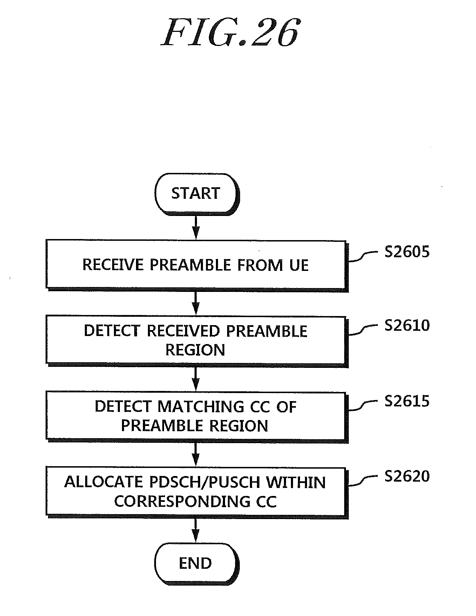

FIG. 26 is a flowchart in which an eNB analyzes a preamble transmitted from a UE according to an embodiment of the present invention. For example, FIG. 26 illustrates a process in which the eNB analyzes the preamble selected according to FIG. 25 and transmitted from the UE.

Referring to FIG. 26, the eNB receives a preamble from the UE in step S2605. The preamble may be compared with the set for the region allocated for each CC described above. That is, information on a preamble region of the received preamble is detected in step S2610. As a result of the detection, when a CC corresponding to the preamble region is detected in step S2615, the eNB allocates a PDSCH/PUSCH within the corresponding CC in step S2620.

Meanwhile, according to the present invention, The UE basically supports one or more RAPs and can support a setting of a primary cell (hereinafter, referred to as a P-Cell) in which an RRC signaling path is set and the remaining secondary cells (hereinafter, referred to as S-Cell) and a complex UL/DL linkage environment at the same time.

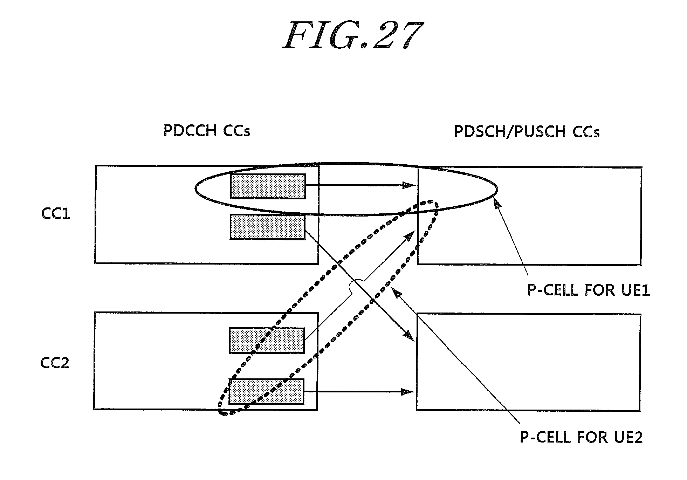

The RAP (Random Access Procedure) may be basically performed through the P-Cell but there is still ambiguity of a random access because a P-Cell setting and a UL/DL linkage are UE-specific and a cross-linkage may be formed as shown in FIG. 27 (relation between a P-Cell setting method for each UE and a UL/DL linkage).

Accordingly, when a preamble region is set for each CC according to the present invention in order to prevent the confusion of the random access based on the UL/DL linkage basically mentioned in a 3GPP LTE-A (beyond Rel-10), the ambiguity of the RAP can be removed regardless of the P-Cell setting for each UE and the UL/DL linkage.

For example, when preambles are transmitted at the same time in a situation where the UE1 sets a CC1 as the P-Cell and the UE2 sets a CC2 as the P-Cell in FIG. 27, the preambles of the UE1 and the UE2 can be simultaneously transmitted to the eNB through the CC1 of the PUSCH or the UL CC1 configuring the cross-linkage.

At this time, after the eNB receives the preambles, an unknown situation may be generated from any UE. When resources of the preambles are preset based on the P-Cell according to the present invention, the ambiguity problem of the random access may be solved.

While the exemplary embodiments have been shown and described, it will be understood by those skilled in the art that various changes in form and details may be made thereto without departing from the spirit and scope of this disclosure as defined by the appended claims and their equivalents. Thus, as long as modifications fall within the scope of the appended claims and their equivalents, they should not be misconstrued as a departure from the scope of the invention itself.

CROSS-REFERENCE TO RELATED APPLICATION

This application claims priority from and the benefit under 35 U.S.C. §119(a) of Korean Patent Application No. 10-2009-0077338, filed on August 20, 2009, which is hereby incorporated by reference for all purposes as if fully set forth herein. In addition, this application claims priority in countries, other than the U.S., with the same reason based on the Korean Patent Application, which is hereby incorporated by reference for all purposes as if fully set forth herein.

**Claims**

1. A method of allocating resources for each component carrier in a wireless communication system, the method comprising:

   setting a cell-coverage for each component carrier in consideration of a radio environment for each component carrier in an environment where one or more component carriers exist;
   controlling a random access procedure of a UE (User Equipment) according to the set cell-coverage and determining a component carrier which can be allocated resource with priority; and
   allocating resources to the UE through the component carrier which is allocated with priority.

2. The method as claimed in claim 1, wherein the radio environment for each component carrier includes at least one of a propagation condition for each component carrier, a signal quality information distribution, and a combination of the propagation condition for each component carrier and the signal quality information distribution.

3. The method as claimed in claim 1, wherein determining of the component carrier comprises:

   arranging a combination of random access regions in a band which can be used for each region according to a number of component carriers entering within the cell-coverage;
   setting an allocation priority of random access regions arranged to correspond to each service region;
   randomly selecting one configuration index from a random access region having a priority during a camp on process;

transmitting a selected RACH parameter to the UE.

4. The method as claimed in claim 3, the selected RACH parameter is transmitted to the UE through a system information block.

5. The method as claimed in claim 3, wherein, in arranging of the combination of the random access regions, the combination of the random access regions is set considering at least one of an RACH frequency-time and an RACH preamble set.

6. The method as claimed in claim 1, wherein, in allocating of the resources to the UE through the component carrier which is allocated resource with priority, when the component carrier has no fequecy resource to be allocated, frequency resources of another component carrier are allocated to the UE.

7. The method as claimed in claim 3, wherein setting of the allocation priority of the random access regions arranged to correspond to each service region comprises setting an allocation priority of the random access regions by using position information of the UE.

8. The method as claimed in claim 7, wherein the position information of the UE is acquired through position information of the UE periodically or aperiodically reported by the UE.

9. The method as claimed in claim 5, wherein, in arranging of the combination of the random access regions, the combination of the random access regions is arranged according to a number corresponding to a number of component carriers, a particular number, or a frequency reuse factor.

10. The method as claimed in claim 3, wherein the RACH parameter includes at least one of RACH scheduling information, RACH sequences, access class restrictions, and RACH power control parameters.

11. A method of allocating resources for each component carrier of a UE by a BS (Base Station) in a wireless communication system, the method comprising:

setting a cell-coverage for each component carrier in consideration of a radio environment for each component carrier in an environment where one or more component carriers exist;
arranging a combination of random access regions in a band which can be used for each service region in consideration of a number of component carriers entering within the cell-coverage;
setting an allocation priority of the random access regions arranged to correspond to each service region;
randomly selecting one configuration index from a random access region having a priority during a camp-on process and transmitting a corresponding RACH parameter to the UE; and
allocating resources to the UE through a component carrier which is allocated with priority.

12. The method as claimed in claim 11, wherein the camp-on process comprises configuring a synchronization with a BS and receiving an MIB (Master Information Block) from a PBCH (Broadcast Channel) and an SIB (System Information Block) from a PDSCH (Physical Downlink Shared Channel) by the UE.

13. A method of communication by a UE in a wireless communication system, the method comprising:

receiving an RACH parameter from a BS in a camp-on process; and
performing communication with the BS through a component carrier allocated according to the received RACH parameter;
wherein performing of the communication with the BS comprises identifying an arrangement of a combination of random access regions in a band which can be used for each component carrier region by the UE and the combination of the random access regions is set considering at least one of an RACH frequency-time and an RACH preamble set.

14. The method as claimed in claim 13, wherein the camp-on process comprises configuring a synchronization with the BS and receiving an MIB (Master Information Block) from a PBCH (Broadcast Channel) and an SIB (System Information Block) from a PDSCH (Physical Downlink Shared Channel) by the UE.

15. A method of allocating resources for each component carrier by a UE, the method comprising:

sharing information on a preamble set including one or more preamble regions with a BS;
selecting a preamble from preamble regions included in the preamble set; and
transmitting the selected preamble to the BS.

16. The method as claimed in claim 15, further comprising selecting a particular component carrier and selecting a preamble region, which corresponds to the selected particular component carrier, included in the preamble set before selecting of the preamble.

17. The method as claimed in claim 15, further comprising receiving preamble region information from the BS before selecting of the preamble.

18. The method as claimed in claim 15, further comprising receiving a random access response from the BS after transmitting of the preamble to the BS.

19. The method as claimed in claim 15, wherein selecting of the preamble comprises selecting a preamble corresponding to a service region of a corresponding component carrier obtained by dividing the preamble set by a frequency reuse factor.

20. The method as claimed in claim 19, wherein selecting of the preamble further comprises selecting a preamble corresponding to a service region of a corresponding component carrier obtained by dividing the preamble set by a nearest frequency reuse factor.

21. A method of allocating resource for each component carrier by a BS, the method comprising:

sharing information on a preamble set including one or more preamble regions with a UE;
receiving a preamble from the UE; and
transmitting a random access response by using the received preamble.

22. The method as claimed in claim 21, further comprising:

selecting a component carrier before receiving of the preamble;
selecting a preamble region, which corresponds to the selected component carrier, included in the preamble set; and
transmitting the selected preamble region to the UE.

23. The method as claimed in claim 22, further comprising allocating resources to a component carrier corresponding to the received preamble region after receiving of the preamble from the UE.

24. The method as claimed in claim 21, wherein selecting of the preamble further comprises selecting a preamble corresponding to a service region of a corresponding component carrier obtained by dividing the preamble set by a frequency reuse factor.

25. The method as claimed in claim 24, wherein selecting of the preamble further comprises selecting a preamble corresponding to a service region of a corresponding component carrier obtained by dividing the preamble set by a nearest frequency reuse factor.

26. A wireless communication system for allocating resources for each component carrier, the wireless communication system comprising:

a BS for setting a cell-coverage for each component carrier configured in consideration of a radio environment, determining a component carrier through which resources can be allocated resource with priority to a UE by controlling a random access procedure of the UE according to the set cell-coverage, and transmitting to the UE; and
the UE for acquiring information transmitted from the BS, identifying an arrangement of a combination of random access regions in a band which can be used for each component carrier region, and identifying that the combination of the random access regions is set in consideration of at least one of an RACH frequency-time and an RACH preamble set.

27. The wireless communication system as claimed in claim 26, wherein the UE shares information on a preamble set including one or more preamble regions with the BS, selects a preamble from the preamble regions included in the preamble set, and transmits the selected preamble to the BS.

28. The wireless communication system as claimed in claim 26, wherein the UE identifies that the combination of the random access regions is set according to a number corresponding to a number of component carriers set in the UE or a frequency reuse factor.

# *FIG.1*

## FIG.2

LTE REGION
(MAX 20MHz)

EXTENDED REGION
(MAX 20MHz OF EACH CARRIER)

FOR
DOWNLINK

| $CC_0$ | $CC_1$ | $CC_2$ | $CC_3$ | $CC_4$ |

*FREQ.*

LTE REGION
(MAX 20MHz)

EXTENDED REGION
(MAX 20MHz OF EACH CARRIER)

FOR
UPLINK

| $CC_0$ | $CC_1$ | $CC_2$ | $CC_3$ | $CC_4$ |

*FREQ.*

EP 2 469 952 A2

# FIG.3

# FIG.4

LTE REGION
(MAX 20MHz)

EXTENDED REGION
(MAX 20MHz OF EACH CARRIER)

CC$_0$ · · · CC$_1$ · · · CC$_2$ · · · CC$_3$ · · · CC$_4$

FREQ.

eNB-1
eNB-0
eNB-2

eNB-1
eNB-0
eNB-2

eNB-1
eNB-0
eNB-2

THE CELL-COVERAGE OF CC$_0$    THE CELL-COVERAGE OF CC$_1$    THE CELL-COVERAGE OF CC$_2$

EP 2 469 952 A2

# FIG.5

LTE REGION
(MAX 20MHz)

EXTENDED REGION
(MAX 20MHz OF EACH CARRIER)

$CC_0$ · · · $CC_1$ · · · $CC_2$ · · · $CC_3$ · · · $CC_4$

FREQ.

eNB-1

eNB-0

eNB-2

THE CELL COVERAGE OF $CC_0$

# FIG.6

LOW CENTER FREQUENCY

HIGH CENTER FREQUENCY

$CC_0$ · · · $CC_1$ · · · $CC_2$ · · · $CC_3$ · · · $CC_4$

FREQ.

eNB-0

ALLOCATED TO THE SLASH REGION (A DEVIANT CREASE LINE)

eNB-1

ALLOCATED TO THE SLASH REGION (A DEVIANT CREASE LINE)

# FIG.7

eNB-0 ALLOCATED TO THE SLASH REGION (A DEVIANT CREASE LINE)

eNB-1 ALLOCATED TO THE SLASH REGION (A DEVIANT CREASE LINE)

LOW CENTER FREQUENCY

HIGH CENTER FREQUENCY

eNB-0   $CC_0$   ...   $CC_1$   ...   $CC_2$   ...   $CC_3$   ...   $CC_4$

eNB-1   $CC_0$   ...   $CC_1$   ...   $CC_2$   ...   $CC_3$   ...   $CC_4$

FREQ.

EP 2 469 952 A2

FIG.8

eNB-1

eNB-0

eNB-2

LOW CENTER FREQUENCY    HIGH CENTER FREQUENCY

eNB-0

eNB-1

eNB-2

$CC_0$    $CC_1$    $CC_2$    FREQ.

UE TO NEED RANDOM ACCESS

USED FREQUENCY REGION

LOW CENTER FREQUENCY    HIGH CENTER FREQUENCY

eNB-0

eNB-1

eNB-2

$CC_0$    $CC_1$    $CC_2$    FREQ.

NEW UE IN THE SYSTEM

USED FREQUENCY REGION

# FIG.9

FOR
DOWNLINK

CC<sub>0</sub>    CC<sub>1</sub>

FOR WHICH CC?

FOR
UPLINK

RACH

CC<sub>0</sub>

FIG.10

*FIG.11*

# FIG.12

COMPONENT CARRIER

| CC₄ | CC₃ | CC₀ | CC₁ | CC₂ |

DIVISION

RACH REGION FOR CC₀

RACH REGION FOR CC₁

FREQ.

TIME

UL COMPONENT CARRIER

DIVISION

PRACH CONFIGURATION 0
PRACH CONFIGURATION 1
⋮
PRACH CONFIGURATION 31
PRACH CONFIGURATION 32
⋮
PRACH CONFIGURATION 62
PRACH CONFIGURATION 63

64 PREAMBLE INDICES

PREAMBLE SET REGION 1

PREAMBLE SET REGION 2

PREAMBLE CONFIGURATION INDEX

EP 2 469 952 A2

# FIG.13

```
          ┌─────────┐
          │  START  │
          └─────────┘
               │
               ▼
┌─────────────────────────────────────────┐
│  CALCULATE CELL-COVERAGE FOR EACH CC     │── S10
└─────────────────────────────────────────┘
               │
               ▼
┌─────────────────────────────────────────┐
│ ARRANGE RANDOM ACCESS REGIONS IN         │
│    CONSIDERATION                         │── S20
│  OF CELL-COVERAGE FOR EACH CC            │
└─────────────────────────────────────────┘
               │
               ▼
┌─────────────────────────────────────────┐
│ ALLOCATE PRIORITY OF RANDOM ACCESS       │── S30
│            REGIONS                       │
└─────────────────────────────────────────┘
               │
               ▼
┌─────────────────────────────────────────┐
│       TRANSMIT RACH PARAMETER            │── S40
└─────────────────────────────────────────┘
               │
               ▼
┌─────────────────────────────────────────┐
│  ALLOCATE RESOURCES TO UE THROUGH        │── S50
│        CORRESPONDING CC                  │
└─────────────────────────────────────────┘
               │
               ▼
          ┌─────────┐
          │   END   │
          └─────────┘
```

# *FIG.14*

CELL COVERAGE OF $CC_0$ BY THE PATH-LOSS

eNB-0
eNB-1
eNB-2

CELL COVERAGE OF $CC_0$ BY THE AVG. $SINR_{UE}$

eNB-0
eNB-1
eNB-2

CELL COVERAGE OF $CC_0$ BY THE PATH-LOSS + AVG. $SINR_{UE}$

eNB-0
eNB-1
eNB-2

FIG.15

CELL SERVICE COVERAGE OF $CC_0$

CELL SERVICE COVERAGE OF $CC_0+CC_1$

CELL SERVICE COVERAGE OF $CC_0+CC_1+CC_2$

EP 2 469 952 A2

FIG.16

INSIDE OF BLUE REGION

INSIDE OF GREEN-YELLOW REGION

PREAMBLE SET REGION 1 SET REGION 2

PREAMBLE SET REGION 1
PREAMBLE SET REGION 2

PRACH CONFIGURATION 0
PRACH CONFIGURATION 1
.
.
.
PRACH CONFIGURATION 31
PRACH CONFIGURATION 32
.
.
.
PRACH CONFIGURATION 62
PRACH CONFIGURATION 63

PREAMBLE CONFIGURATION
INDEX

eNB-1

eNB-0

eNB-2

PRACH CONFIGURATION 0
PRACH CONFIGURATION 1
.
.
.
PRACH CONFIGURATION 20
PRACH CONFIGURATION 21
PRACH CONFIGURATION 22
.
.
.
PRACH CONFIGURATION 41
PRACH CONFIGURATION 42
PRACH CONFIGURATION 43
.
.
.
PRACH CONFIGURATION 63

PREAMBLE SET REGION 1 SET REGION 2 SET REGION 3

PREAMBLE PREAMBLE PREAMBLE

CELL SERVICE COVERAGE OF $CC_0$

CELL SERVICE COVERAGE OF $CC_0 + CC_1$

CELL SERVICE COVERAGE OF $CC_1 + CC_1 + CC_2$

PREAMBLE CONFIGURATION
INDEX

UL COMPONENT CARRIER

FREQ.

SHARING RACH REGION
FOR ALL CCs

UL BANDWIDTH

TIME

EP 2 469 952 A2

INSIDE OF BLUE REGION

RACH REGION FOR $CC_0$

RACH REGION FOR $CC_1$

FREQ.

UL BANDWIDTH

TIME

UL COMPONENT CARRIER

eNB-1

eNB-0

eNB-2

INSIDE OF GREEN-YELLOW REGION

RACH REGION FOR $CC_0$

RACH REGION FOR $CC_1$

RACH REGION FOR $CC_2$

FREQ.

UL BANDWIDTH

TIME

UL COMPONENT CARRIER

CELL SERVICE COVERAGE OF $CC_0$

CELL SERVICE COVERAGE OF $CC_1$

CELL SERVICE COVERAGE OF $CC_2$

PREAMBLE CONFIGURATION INDEX

PRACH CONFIGURATION 0

PRACH CONFIGURATION 1

PRACH CONFIGURATION 62

PRACH CONFIGURATION 63

LENGTH-64 PREAMBLE SET

FIG.17

EP 2 469 952 A2

34

RANDOMACCESS REGION TYPE 0 OR 1

*FIG.18*

RANDOMACCESS REGION 0

RANDOMACCESS REGION 1

eNB-1

eNB-0

eNB-2

DEFINED RANDOMACCESS REGION TYPE 0

LENGTH-64 PREAMBLE SET

PRACH CONFIGURATION 0

PRACH CONFIGURATION 1

⋮

PRACH CONFIGURATION 62

PRACH CONFIGURATION 63

PREAMBLE CONFIGURATION INDEX

FREQ.

RACH REGION FOR $CC_0$

RACH REGION FOR $CC_1$

TIME

UL BANDWIDTH

UL COMPONENT CARRIER

DEFINED RANDOMACCESS REGION TYPE 1

PREAMBLE SET REGION 1

PREAMBLE SET REGION 2

PRACH CONFIGURATION 0

PRACH CONFIGURATION 1

⋮

PRACH CONFIGURATION 31

PRACH CONFIGURATION 32

⋮

PRACH CONFIGURATION 62

PRACH CONFIGURATION 63

PREAMBLE CONFIGURATION INDEX

FREQ.

RACH REGION FOR ALL CCs

TIME

UL BANDWIDTH

UL COMPONENT CARRIER

# FIG.19

RA REGION | RA REGION

RA REGION 0

RA REGION 1

RA REGION 0

RA REGION 1

eNB-0

RACH PARAMETER FOR INDEX 20

eNB-2

RACH PARAMETER FOR INDEX 40

FIG.20

CELL SERVICE-COVERAGE OF $CC_0$ & $CC_1$

## FIG.21

EP 2 469 952 A2

FIG.22

# FIG.23

## FIG.24

```
        ┌──────────────┐ ⌐2400          ┌──────────────┐ ⌐2405
        │      UE      │                 │     eNB      │
        └──────────────┘                 └──────────────┘
                │                                │
    ┌──────────────────────┐ ⌐S2410             │
    │   RACH PREAMBLE      │                     │
    │  RESOURCE SELECTION  │                     │
    └──────────────────────┘                     │
                │   RANDOM ACCESS PREAMBLE       │
                │───────────────────────────────▶│
                │         (S2415)                 │
                │                    ┌──────────────────────┐ ⌐S2420
                │                    │  DETECTION OF RACH   │
                │                    │ PREAMBLE LOCATION    │
                │                    └──────────────────────┘
                │   RANDOM ACCESS RESPONSE       │
                │◀───────────────────────────────│
                │         (S2425)                 │
                │                                 │
                │        L2/L3 MESSAGE           │
                │───────────────────────────────▶│
                │         (S2430)                 │
                │                                 │
                │  MESSAGE FOR EARLY CONTENTION  │
                │◀───────────────────────────────│
                │     RESOLUTION (S2435)          │
```

EP 2 469 952 A2

FIG.25

START

REQUIRE RESOURCE ALLOCATION — S2505

S2510

YES

OPERATION
BY UE

UE REQUESTS RESOURCE
ALLOCATION?

NO

OPERATION
BY eNB

S2515 — SELECT CC

SELECT CC — S2520

S2525 — SELECT CC PREAMBLE
REGION

SELECT CC PREAMBLE
REGION — S2530

S2535 — SELECT PREAMBLE WITHIN
SELECTED PREAMBLE REGION

TRANSMIT SELECTED
PREAMBLE REGION
INFORMATION TO UE — S2540

S2545 — TRANSMIT SELECTED
PREAMBLE

END

EP 2 469 952 A2

# FIG.26

START

RECEIVE PREAMBLE FROM UE — S2605

DETECT RECEIVED PREAMBLE REGION — S2610

DETECT MATCHING CC OF PREAMBLE REGION — S2615

ALLOCATE PDSCH/PUSCH WITHIN CORRESPONDING CC — S2620

END

# FIG.27

PDCCH CCs            PDSCH/PUSCH CCs

CC1

CC2

P-CELL FOR UE1

P-CELL FOR UE2

EP 2 469 952 A2

44

**REFERENCES CITED IN THE DESCRIPTION**

**Patent documents cited in the description**

- KR 1020090077338